# EUROPEAN PATENT APPLICATION

(11) **EP 3 136 710 A1**
(43) Date of publication of application: **01.03.2017**
(21) Application number: 16185839.4
(22) Date of filing: 26.08.2016
(51) Int. Cl.: H04N 5/232, B64C 39/02, G05D 1/00

(54) **METHOD AND APPARATUS FOR CONTROLLING PHOTOGRAPHY OF UNMANNED AERIAL VEHICLE**

(30) Priority: 26.08.2015 CN 201510531707
(71) Applicant: Xiaomi Inc., Beijing 100085 (CN)
(72) Inventor: ZHANG, Pengfei, Haidian District, Beijing 100085 (CN); XIA, Yongfeng, Haidian District, Beijing 100085 (CN); LIU, Tiejun, Haidian District, Beijing 100085 (CN)
(74) Representative: Robson, Aidan John

(57) **Abstract**

The present disclosure relates to a method and an apparatus for controlling photography of an unmanned aerial vehicle and an electronic device. The method includes: determining that a predefined mode starting condition is satisfied; and starting a predetermined photographic mode corresponding to the predefined mode starting condition, so as to be applied in a photographic operation. With the technical solutions of the present disclosure, the photography control of the unmanned aerial vehicle may be simplified, and actual demands under different scenarios may be satisfied by smoothly switching among the photographic modes.

## Description

### FIELD

The present disclosure relates to the filed of unmanned aerial vehicle technology, and more particularly to a method and an apparatus for controlling photography of an unmanned aerial vehicle, and an electronic device.

### BACKGROUND

The unmanned aerial vehicle has been used widely in various scenarios such as aerial photography, rescue and the like. In the related art, when the unmanned aerial vehicle is used to perform the aerial photography, it needs the user to control the unmanned aerial vehicle to fly and to photograph manually, which requires that the user not only has a high level of flight control, but also focuses on the flight control of the unmanned aerial vehicle, such that the user cannot do any other matter separately, thus highly limiting the application scenarios.

### SUMMARY

The present disclosure provides a method and an apparatus for controlling photography of an unmanned aerial vehicle and an electronic device, so as to solve deficiencies in the related art.

According to embodiments of a first aspect of the present disclosure, a method for controlling photography of an unmanned aerial vehicle is provided. The method includes:
determining that a predefined mode starting condition is satisfied; and
starting a predetermined photographic mode corresponding to the predefined mode starting condition, so as to be applied in a photographic operation.

Alternatively, the predefined mode starting condition includes at least one of:
receiving a predetermined instruction sent from a user;
detecting that the user is in a predetermined posture; and
detecting that the unmanned aerial vehicle or the user is in a predetermined enviromental condition.

Alternatively, the method further includes:
acquiring a motion characteristic of the user; and
determining that the predetermined instruction sent from the user is received and that the predefined mode starting condition is satisfied, if the motion characteristic is in accordance with a predetermined characteristic.

Alternatively, acquiring a motion characteristic of the user includes:
performing an image acquisition on the user so as to acquire the motion characteristic; or
establishing a communication with a smart device carried or used by the user and receiving the motion characteristic acquired by the smart device.

Alternatively, the motion characteristic includes a trajectory graph formed by a gesture of the user.

Alternatively, the method further includes:
performing an image acquisition on the user so as to determine a posture of the user; or
establishing a communication with a smart device carried or used by the user, receiving a predetermined physiological characteristic parameter of the user acquired by the smart device, and determining a posture of the user according to the predetermined physiological characteristic parameter;
in which it is determined that the predefined mode starting condition is satisfied if the posture of the user is in accordance with the predetermined posture.

Alternatively, the predetermined posture includes at least one of:
a static posture or a movement posture; and
a horizontal posture, an uphill posture or a downhill posture.

Alternatively, the method further includes:
performing an image acquisition on an environment where the unmanned aerial vehicle or the user is, and extracting an enviromental characteristic included in an acquired image; and
determining that the unmanned aerial vehicle or the user is in the predetermined enviromental condition and that the predefined mode starting condition is satisfied, if the enviromental characteristic is in accordance with a predetermined characteristic.

Alternatively, the predetermined enviromental condition where the unmanned aerial vehicle is includes at least one of: an ambient openness; an indoor or outdoor environment; and a distribution of obstacles;
the predetermined enviromental condition where the user is includes at least one of: an ambient openness; an indoor or outdoor environment; and the number of other users surrounding the user.

Alternatively, the predetermined photographic mode includes at least one of: a close-up mode, a distant view mode, a predetermined distance from the user, a predetermined angle with the user, and an encircled photographic mode with the user as a center.

Alternatively, the method further includes:
defining and storing the predetermined photographic mode according to a received configuration instruction of a user; or
acquiring and storing the predetermined photographic mode defined by other users.

Alternatively, the method further includes:
stopping photographing or performing a tracking photographing, if the predefined mode starting condition is not satisfied.

According to embodiments of a second aspect of the present disclosure, an apparatus for controlling photography of an unmanned aerial vehicle is provided. The apparatus includes:
a determining unit, configured to determine that a predefined mode starting condition is satisfied; and
a starting unit, configured to start a predetermined photographic mode corresponding to the predefined mode starting condition, so as to be applied in a photographic operation.

Alternatively, the predefined mode starting condition includes at least one of:
receiving a predetermined instruction sent from a user;
detecting that the user is in a predetermined posture; and
detecting that the unmanned aerial vehicle or the user is in a predetermined enviromental condition.

Alternatively, the apparatus further includes:
an acquiring unit, configured to acquire a motion characteristic of the user; and
a first judging unit, configured to determine that the predetermined instruction sent from the user is received and that the predefined mode starting condition is satisfied, if the motion characteristic is in accordance with a predetermined characteristic.

Alternatively, the acquiring unit includes:
an acquiring subunit, configured to perform an image acquisition on the user so as to acquire the motion characteristic; or
a receiving subunit, configured to establish a communication with a smart device carried or used by the user and receive the motion characteristic acquired by the smart device.

Alternatively, the motion characteristic includes a trajectory graph formed by a gesture of the user.

Alternatively, the apparatus further includes:
a collecting unit, configured to perform an image acquisition on the user so as to determine a posture of the user; or
a receiving unit, configured to establish a communication with a smart device carried or used by the user, receive a predetermined physiological characteristic parameter of the user acquired by the smart device, and determine a posture of the user according to the predetermined physiological characteristic parameter;
in which the determining unit determines that the predefined mode starting condition is satisfied if the posture of the user is in accordance with the predetermined posture.

Alternatively, the predetermined posture includes at least one of:
a static posture or a movement posture; and
a horizontal posture, an uphill posture or a downhill posture.

Alternatively, the apparatus further includes:
an extracting unit, configured to perform an image acquisition on an environment where the unmanned aerial vehicle or the user is, and extract an enviromental characteristic included in an acquired image;
a second judging unit, configured to determine that the unmanned aerial vehicle or the user is in the predetermined enviromental condition and that the predefined mode starting condition is satisfied, if the enviromental characteristic is in accordance with a predetermined characteristic.

Alternatively, the predetermined enviromental condition where the unmanned aerial vehicle is includes at least one of: an ambient openness; an indoor or outdoor environment; and a distribution of obstacles;
the predetermined enviromental condition where the user is includes at least one of: an ambient openness; an indoor or outdoor environment; and the number of other users surrounding the user.

Alternatively, the predetermined photographic mode includes at least one of: a close-up mode, a distant view mode, a predetermined distance from the user, a predetermined angle with the user, and an encircled photographic mode with the user as a center.

Alternatively, the apparatus further includes:
a mode defining unit, configured to define and store the predetermined photographic mode according to a received configuration instruction of a user; or
a mode acquiring unit, configured to acquire and store the predetermined photographic mode defined by other users.

Alternatively, the apparatus further includes:
a photography controlling unit, configured to stop photographing or perform a tracking photographing, if the predefined mode starting condition is not satisfied.

According to embodiments of a third aspect, an electronic device includes:
a processor; and
a memory, configured to store instructions executable by the processor;
in which, the processor is configured to:
determine that a predefined mode starting condition is satisfied; and
start a predetermined photographic mode corresponding to the predefined mode starting condition, so as to be applied in a photographic operation.

According to embodiments of a fourth aspect, a computer-readable storage medium has stored therein instructions that, when executed by a processor of a device, causes the device to perform the method for controlling photography of an unmanned aerial vehicle according to the first aspect of the present disclosure.

The technical solutions provided in the present disclosure may include the following beneficial effects.

It can be seen from above embodiments of the present disclosure that, in the present disclosure, by defining the corresponding mode starting condition for each predetermined photographic mode, the unmanned aerial vehicle may actually know the predetermined photographic mode required to be started if one mode starting condition is satisfied, thus ensuring actual photographing demands of the user. Meanwhile, by automatically switching among predetermined photographic modes, it does not need the user to control the flight of the unmanned aerial vehicle manually, such that the aerial photography and other matters may be finished at the same time, thus facilitating the improvement of user experience.

It should be understood that, the above general description and following detail description are exemplary and explanatory, and shall not be construed to limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flow chart of a method for controlling photography of an unmanned aerial vehicle according to an exemplary embodiment.
Fig. 2 is a flow chart of another method for controlling photography of an unmanned aerial vehicle according to an exemplary embodiment.
Fig. 3 is a schematic diagram showing a scene that an unmanned aerial vehicle receives a user instruction according to an exemplary embodiment.
Fig. 4 is a schematic diagram showing another scene that an unmanned aerial vehicle receives a user instruction according to an exemplary embodiment.
Fig. 5 is a flow chart of a still method for controlling photography of an unmanned aerial vehicle according to an exemplary embodiment.
Fig. 6 is a schematic diagram showing a scene that an unmanned aerial vehicle acquires a posture of a user according to an exemplary embodiment.
Fig. 7 is a schematic diagram showing another scene that an unmanned aerial vehicle acquires a posture of a user according to an exemplary embodiment.
Fig. 8 is a schematic diagram showing a still scene that an unmanned aerial vehicle acquires a posture of a user according to an exemplary embodiment.
Fig. 9 is a flow chart of yet another method for controlling photography of an unmanned aerial vehicle according to an exemplary embodiment.
Fig. 10 is a schematic diagram showing a scene that an unmanned aerial vehicle acquires a detected enviromental condition according to an exemplary embodiment.
Figs. 11-17 are block diagrams of an apparatus for controlling photography of an unmanned aerial vehicle according to an exemplary embodiment.
Fig. 18 is a schematic diagram of a device for controlling photography of an unmanned aerial vehicle according to an exemplary embodiment.

### DETAILED DESCRIPTION

Exemplary embodiments will be described in detail herein, and examples thereof are illustrated in accompanying drawings. Throughout figures referred by the following description, the same reference number in different figures indicates the same or similar elements unless otherwise stated. Implementations described in the following exemplary embodiments do not represent all the implementations consistent with the present disclosure. Instead, they are only examples of the apparatus and method consistent with some aspects of the present disclosure detailed in the appended claims.

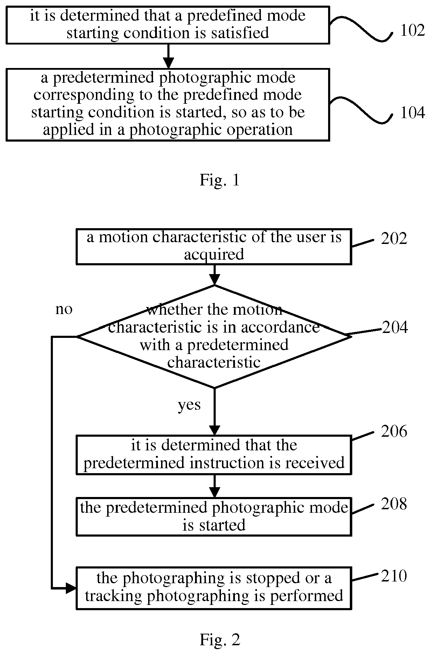

As shown in Fig. 1, Fig. 1 is a flow chart of a method for controlling photography of an unmanned aerial vehicle according to an exemplary embodiment. The method may be used in the unmanned aerial vehicle, and includes steps as follows.

In step 102, it is determined that a predefined mode starting condition is satisfied.

In embodiments of the present disclosure, the predefined mode starting condition may include at least one of: receiving a predetermined instruction sent from a user; detecting that the user is in a predetermined posture; and detecting that the unmanned aerial vehicle or the user is in a predetermined enviromental condition.

In an exemplary embodiment, when the predefined mode starting condition is that the predetermined instruction sent from the user is received, a motion characteristic of the user may be acquired, and it is determined that the predetermined instruction sent form the user is received and that the predefined mode starting condition is satisfied if the motion characteristic is in accordance with a predetermined characteristic. The motion characteristic may be acquired by performing an image acquisition on the user; or a communication with a smart device carried or used by the user may be established and the motion characteristic acquired by the smart device may be received.

Accordingly, the motion characteristic includes a trajectory graph formed by a gesture of the user.

In another exemplary embodiment, when the predefined mode starting condition is that the user is detected to be in the predetermined posture, an image acquisition may be performed on the user so as to determine a posture of the user; or a communication with a smart device carried or used by the user may be established, a predetermined physiological characteristic parameter of the user acquired by the smart device may be received and a posture of the user may be determined according to the predetermined physiological characteristic parameter. It is determined that the predefined mode starting condition is satisfied if the posture of the user is in accordance with the predetermined posture.

Accordingly, the predetermined posture includes at least one of: a static posture or a movement posture; and a horizontal posture, an uphill posture or a downhill posture.

In yet another exemplary embodiment, when the predefined mode starting condition is that the unmanned aerial vehicle or the user is detected to be in the predetermined enviromental condition, an image acquisition may be performed on an environment where the unmanned aerial vehicle or the user is, and an enviromental characteristic included in an acquired image may be extracted; it is determined that the unmanned aerial vehicle or the user is in the predetermined enviromental condition and that the predefined mode starting condition is satisfied if the enviromental characteristic is in accordance with the predetermined characteristic. The predetermined enviromental condition where the unmanned aerial vehicle is includes at least one of: an ambient openness; an indoor or outdoor environment; and a distribution of obstacles; the predetermined enviromental condition where the user is includes at least one of: an ambient openness; an indoor or outdoor environment; and the number of other users surrounding the user.

Accordingly, the predetermined photographic mode includes at least one of: a close-up mode, a distant view mode, a predetermined distance from the user, a predetermined angle with the user, and an encircled photographic mode with the user as a center.

In step 104, a predetermined photographic mode corresponding to the predefined mode starting condition is started, so as to be applied in a photographic operation.

In this embodiment, the predetermined photographic mode may be defined and stored according to a received configuration instruction of the user; or the predetermined photographic mode defined by other users may be acquired and stored.

It can be seen from the above embodiment that, in the present disclosure, by defining the corresponding mode starting condition for each predetermined photographic mode, the unmanned aerial vehicle may actually know the predetermined photographic mode required to be started if one mode starting condition is satisfied, thus ensuring actual photographing demands of the user. Meanwhile, by automatically switching among predetermined photographic modes, it does not need the user to control the flight of the unmanned aerial vehicle manually, such that the aerial photography and other matters may be finished at the same time, thus facilitating the improvement of user experience.

The technical solutions of the present disclosure will be described in details with reference to specific embodiments below. For purpose of description, each embodiment is distinguished based on different predetermined mode starting conditions. As described above, the predefined mode starting condition may include at least one of: receiving the predetermined instruction sent from the user; detecting that the user is in the predetermined posture; and detecting that the unmanned aerial vehicle or the user is in the predetermined enviromental condition.

### Embodiment 1: receiving the predetermined instruction sent from the user

As shown in Fig. 2, Fig. 2 is a flow chart of another method for controlling photography of an unmanned aerial vehicle according to an exemplary embodiment. The method may be used in the unmanned aerial vehicle and include the following steps.

In step 202, a motion characteristic of the user is acquired.

In this embodiment, there may be various ways to acquire the motion characteristic of the user, based on different application scenarios where the unmanned aerial vehicle is, which are not limited herein. In this case, only two possible ways are described.

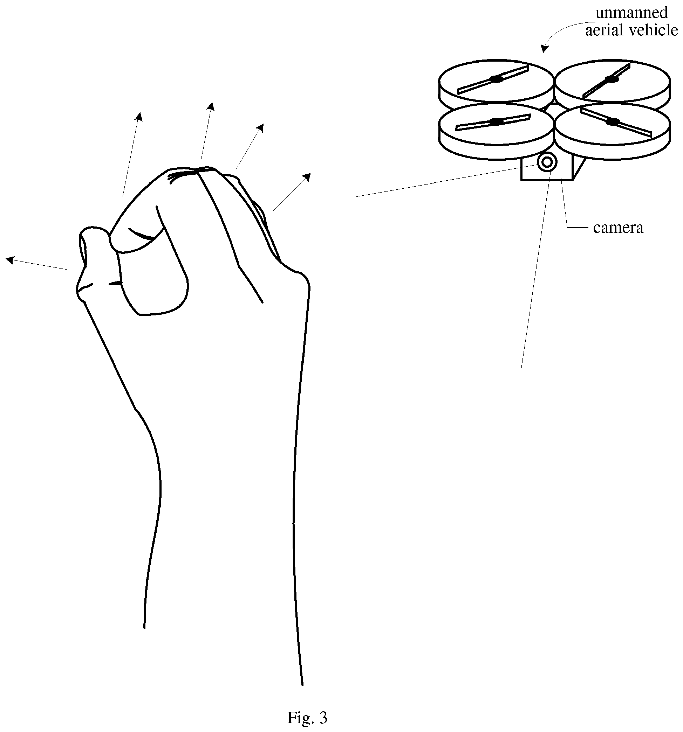

In one situation, as shown in Fig. 3, the unmanned aerial vehicle may perform an image acquisition on the user by a camera directly and perform an image analysis on acquired video data, so as to determine the motion characteristic of the user.

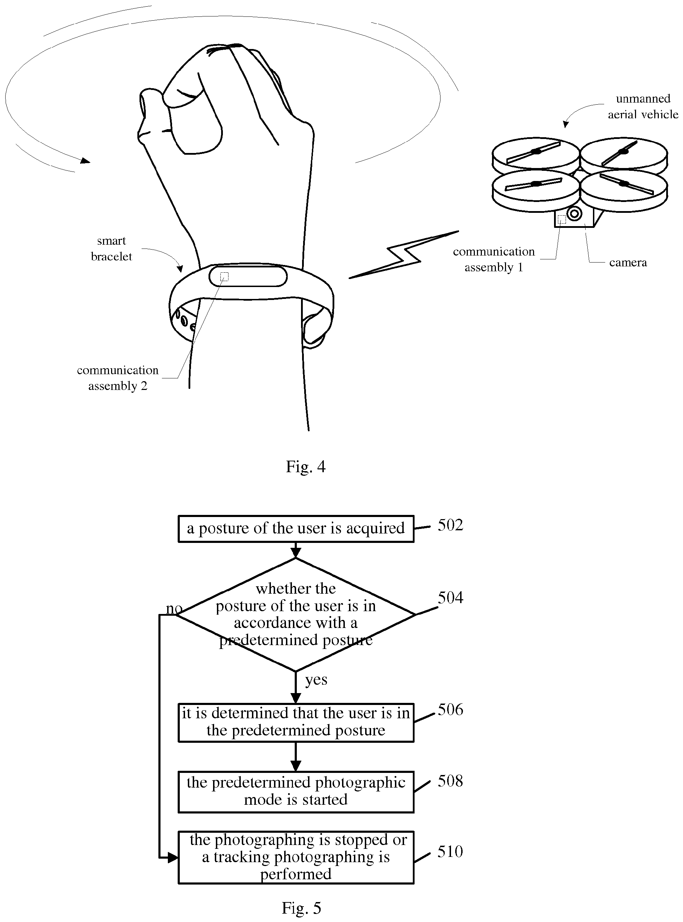

In another situation, as shown in Fig. 4, assuming that the unmanned aerial vehicle is provided with a communication assembly 1, the communication assembly 1 may establish a communication with a smart device carried or used by the user and receive the motion characteristic acquired by the smart device. For example, the smart device may be a smart bracelet as shown in Fig. 4. The smart bracelet is provided with a chip (not shown) such as acceleration sensor, gravity sensor or the like, and moves synchronously with the movement of an arm of the user, so as to acquire the motion characteristic of the user by the above chip and send the acquired motion characteristic to the unmanned aerial vehicle through a wireless communication between the communication assembly 2 provided in the smart bracelet and the communication assembly 1 provided in the unmanned aerial vehicle. The communication assembly 1 may communicate with the communication assembly 2 in any ways, for example in a short-ranged communication mode (such as Bluetooth, WiFi, etc.), or in a long-ranged communication mode (such as 2G, 3G, 4G, etc.).

In step 204, it is determined whether the motion characteristic is in accordance with a predetermined characteristic, if yes, step 206 is executed, or else step 210 is executed.

In this embodiment, the corresponding predetermined characteristic may be set according to the predefined mode starting condition. And the user may edit that according to actual demands to meet his own usage habit and preference.

In step 206, it is determined that the predetermined instruction is received.

In step 208, the predetermined photographic mode is started.

As an exemplary embodiment, the motion characteristic may be a trajectory graph formed by a gesture of the user. It is assumed that the predetermined characteristic is a trajectory graphic formed by opening five fingers. As shown in Fig. 3, when the user conducts a gesture of opening five fingers, the camera may acquire and form a corresponding trajectory graph, and then the corresponding predetermined photographic mode may be determined by searching for a predetermined characteristic matched with this trajectory graph. For example, assuming that the predetermined photographic mode is "close-up mode", the unmanned aerial vehicle controls a lens of the camera to zoom in or out, so as to take a close up of the face or other parts of user.

As another exemplary embodiment, as shown in Fig. 4, the smart bracelet may generate a corresponding trajectory graph according to a detected motion of the user, and send the trajectory graph to the unmanned aerial vehicle. Accordingly, after receiving the trajectory graph sent by the smart bracelet, the unmanned aerial vehicle may determine the corresponding predetermined photographic mode by searching for a predetermined characteristic matched with the trajectory graph. For example, assuming that the predetermined characteristic is "a circle trajectory in a horizontal direction", the corresponding photographic mode is "encircled photographic mode with the user as a center". When the motion characteristic of the user shown in Fig. 4 is in accordance with the predetermined characteristic, the unmanned aerial vehicle flies circularly with the user as the center and a predetermined distance as the radius, and takes pictures by directing the lens of camera to the user all the time.

In step 210, the photographing is stopped or a tracking photographing is performed.

In this embodiment, when the unmanned aerial vehicle stops photographing, the unmanned aerial vehicle may close the camera and land besides the user and the unmanned aerial vehicle is grounded; or the unmanned aerial vehicle may close the camera but keep to fly, for example, fly by following the user (for example, identifies the position of user and flies by keeping a predetermined distance from the user).

When the unmanned aerial vehicle performs the "tracking photographing", the unmanned aerial vehicle may keep the camera in an open state and fly, for example, by following the user.

### Embodiment 2: detecting that the user is in the predetermined posture

Fig. 5 is a flow chart of a still method for controlling photography of an unmanned aerial vehicle according to an exemplary embodiment. As shown in Fig. 5, the method may be used in the unmanned aerial vehicle and include the following steps.

In step 502, a posture of the user is acquired.

In this embodiment, there may be various ways to acquire the posture of the user, based on different application scenarios where the unmanned aerial vehicle is, which are not limited herein. Similar to embodiment 1, there are situations as follows.

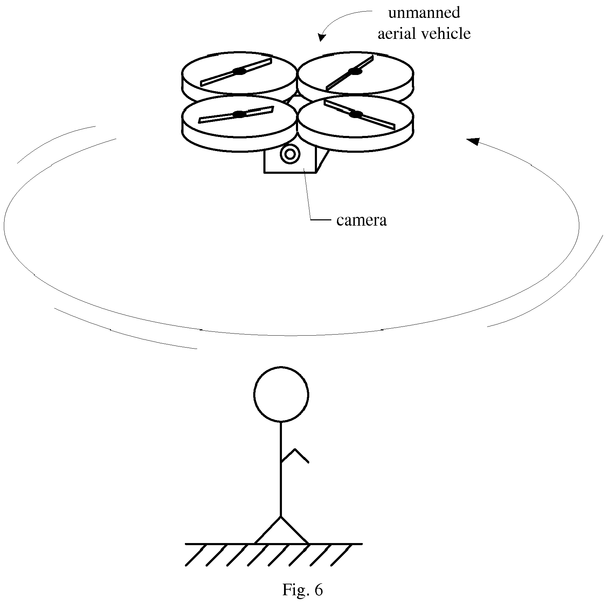

In one situation, as shown in Figs. 6-7, the unmanned aerial vehicle may perform an image acquisition on the user by a camera directly and perform an image analysis on video data acquired, so as to determine the posture of the user.

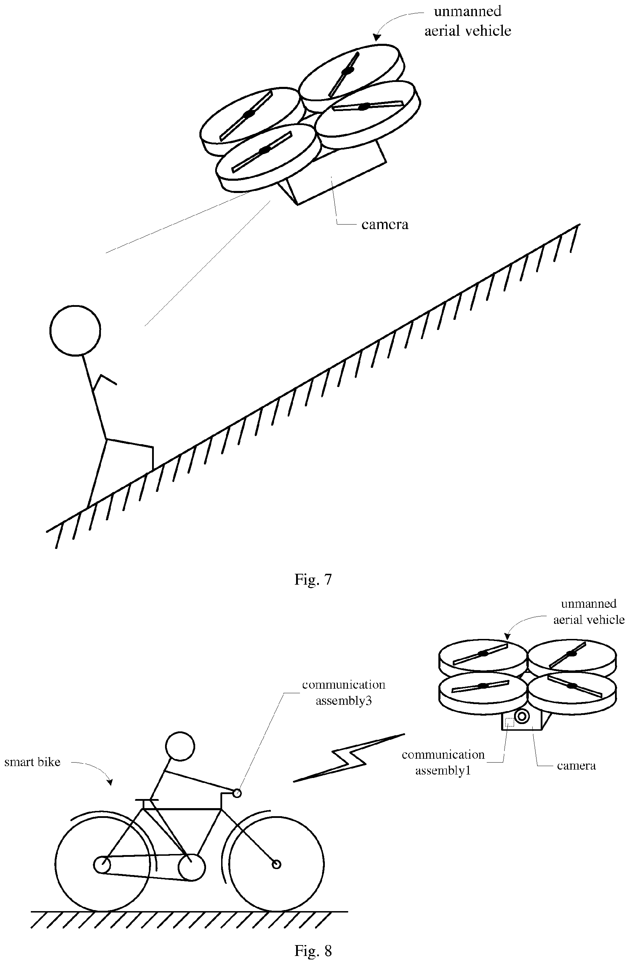

In another situation, as shown in Fig. 8, assuming that the unmanned aerial vehicle is provided with a communication assembly 1, the communication assembly 1 may establish a communication with a smart device carried or used by the user and receive the posture of the user acquired by the smart device. For example, the smart device may be a smart bike as shown in Fig. 8. The smart bike is provided with a chip (not shown) such as acceleration sensor, gravity sensor or the like, and determines the posture of the user by the above chip and sends the acquired motion characteristic to the unmanned aerial vehicle through a wireless communication between the communication assembly 3 provided in the smart bike and the communication assembly 1 provided in the unmanned aerial vehicle. The communication assembly 1 may communicate with the communication assembly 3 in any ways, for example in a short-ranged communication mode (such as Bluetooth, Wi-Fi, etc.), or in a long-ranged communication mode (such as 2G, 3G, 4G, etc.).

In step 504, it is determined whether the posture of the user is in accordance with a predetermined posture, if yes, step 506 is executed, or else step 510 is executed.

In this embodiment, the corresponding predetermined posture may be set according to the predefined mode starting condition. And the user may edit that according to actual demands to meet his own usage habit and preference.

In step 506, it is determined that the user is in the predetermined posture.

In step 508, the predetermined photographic mode is started.

### Implementation 1

As an example implementation, the predetermined posture may include: a horizontal posture, an uphill posture or a downhill posture.

As shown in Fig. 6, it is assumed that the user stands on horizontal ground. After taking pictures for the user, the unmanned aerial vehicle may determine the posture of the user in many ways, for example, identifying an angle between the user and ground; determining an angle between the unmanned aerial vehicle itself and horizontal plane by a gyroscope or the like, determining an angle between the user and horizontal plane according to an imaging angle of the user in the photograph image.

For Fig. 6, the posture of the user is "horizontal posture". The corresponding predetermined photographic mode may be determined by searching for a predetermined posture matched with the posture of the user. For example, the predetermined photographic mode may be "encircled photographic mode with the user as a center".

For another example, as shown in Fig. 7, it is assumed that the user is located on an incline upwardly, the unmanned aerial vehicle may determine the posture of the user is "uphill posture" by taking pictures, and then determines the corresponding predetermined photographic mode by searching for a predetermined posture matched with the posture of the user. For example, the predetermined photographic mode may be "close-up mode".

### Implementation 2

As another example implementation, the predetermined posture may be a static or movement posture.

As shown in Fig. 8, after a function of the smart bike is started, the posture of the smart bike may be used as the posture of the user. For example, the smart bike may be provided with a chip such as acceleration sensor or the like, which may identify whether the smart bike is in the static state or in the movement state.

After the smart bike determines that it is in the static state or the movement state, the smart bike may send this data as the posture of the user to the communication assembly 1 through a communication assembly 3, such that the unmanned aerial vehicle may know the posture of the user. Then, the corresponding predetermined photographic mode may be determined by searching for a predetermined posture matched with the posture of the user. For example, when the user is in the static posture, the predetermined photographic mode may be "encircled photographic mode with the user as a center". And when the user is in the movement state, the predetermined photographic mode may be "distant view mode".

In step 510, the photographing is stopped or a tracking photographing is performed.

### Embodiment 3: detecting that the unmanned aerial vehicle or the user is in the predetermined enviromental condition

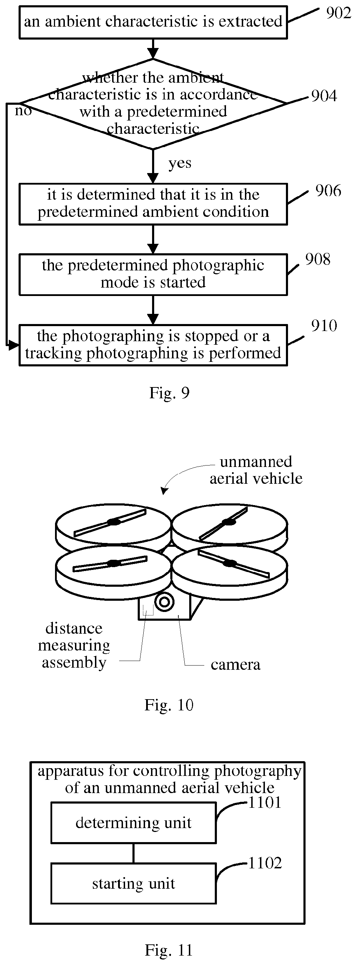

Fig. 9 is a flow chart of yet another method for controlling photography of an unmanned aerial vehicle according to an exemplary embodiment. As shown in Fig. 9, the method may be used in the unmanned aerial vehicle and include the following steps.

In step 902, an enviromental characteristic is extracted.

In this embodiment, there may be various ways to acquire the enviromental characteristic, based on different application scenarios where the unmanned aerial vehicle is, which are not limited herein.

In one situation, as shown in Fig. 10, the unmanned aerial vehicle may perform an image acquisition on the user by a camera directly and perform an image analysis on acquired video data, so as to extract the enviromental characteristic included in an acquired image.

In another situation, as shown in Fig. 10, the unmanned aerial vehicle may be provided with a sensor such as rangefinder or the like, which may measure a distance of the unmanned aerial vehicle from an obstacle, so as to determine a space range for the unmanned aerial vehicle flying.

In step 904, it is determined whether the enviromental characteristic is in accordance with a predetermined characteristic, if yes, step 906 is executed, or else step 910 is executed.

In this embodiment, the corresponding predetermined characteristic may be set according to the predefined mode starting condition. And the user may edit that according to actual demands to meet his own usage habit and preference.

In step 906, it is determined that it is in the predetermined enviromental condition.

In step 908, the predetermined photographic mode is started.

In this embodiment, the predetermined enviromental condition where the unmanned aerial vehicle is includes at least one of: an ambient openness; an indoor or outdoor environment; and a distribution of obstacles; the predetermined enviromental condition where the user is includes at least one of: an ambient openness; an indoor or outdoor environment; and the number of other users surrounding the user. The unmanned aerial vehicle may only acquire the enviromental characteristic of environment where it is or the enviromental characteristic of environment where the user is, or may acquire both the enviromental characteristic of environment where it is and the enviromental characteristic of environment where the user is, so as to determine whether it is in the predetermined enviromental condition.

For example, assuming that the unmanned aerial vehicle detects that both itself and the user are in an environment with high openness (such as on a lawn outdoor), the predetermined photographic mode "encircled photographic mode with the user as a center" may be started. Assuming that the unmanned aerial vehicle detects that both itself and the user are in an indoor environment and the number of other users surrounding the user reaches a predetermined number, it is determined that it is in a conference (such as an annual meeting) scenarios, and then the predetermined photographic mode "distant view mode" may be started.

In step 910, the photographing is stopped or a tracking photographing is performed.

It should be noted that, although the technical solutions of the present disclosure is described by taking different mode starting conditions as an example, in Figs 2, 5 and 9, those skilled in the art should understand that, a mode starting condition may act separately or may act by coordinating with the other. For example, the posture of the user and the enviromental condition where the unmanned aerial vehicle is may be detected, and the corresponding predetermined photographic mode may be started if the posture of the user is the predetermined posture and the unmanned aerial vehicle is in the predetermined enviromental condition.

### 1, predetermined photographic mode

In the technical solutions of the present disclosure, the predetermined photographic mode may include at least one of: a close-up mode, a distant view mode, a predetermined distance from the user, a predetermined angle with the user, and an encircled photographic mode with the user as a center. Certainly, the present disclosure does not limit it; any other photographic mode may be applied in the technical solutions of the present disclosure.

In the technical solutions of the present disclosure, besides the predetermined photographic modes already defined by the manufacture, the predetermined photographic mode in the unmanned aerial vehicle may be acquired in many ways.

As an exemplary embodiment, the user may define the predetermined photographic mode himself: the unmanned aerial vehicle defines and stores the corresponding predetermined photographic mode according to the received configuration instruction of the user. In this embodiment, by the user-defined of predetermined photographic modes, personalized demands of user may be satisfied.

As another exemplary embodiment, the user may acquire the photographic mode defined by other users as the predetermined photographic mode in his unmanned aerial vehicle: the predetermined photographic mode defined by other users is acquired and stored. In this embodiment, by acquiring photographic modes defined by other users, it facilitates the resource sharing of the photographic modes among the users, and reduces the demand of the user pursuing personalized photography. For example, the user may download the photographic mode to the unmanned aerial vehicle via internet, or the user may import the photographic mode to the unmanned aerial vehicle via USB disk, SD card, data wire or the like, after acquiring the photographic mode in any way.

Corresponding to the above embodiments of the method for controlling photography of an unmanned aerial vehicle, the present disclosure further provide embodiments of the apparatus for controlling photography of an unmanned aerial vehicle.

Fig. 11 is a block diagram of an apparatus for controlling photography of an unmanned aerial vehicle according to an exemplary embodiment. Referring to Fig. 11, the apparatus includes a determining unit 1101 and a starting unit 1102.

The determining unit 1101 is configured to determine that a predefined mode starting condition is satisfied.

The starting unit 1102 is configured to start a predetermined photographic mode corresponding to the predefined mode starting condition, so as to be applied in a photographic operation.

Alternatively, the predefined mode starting condition includes at least one of: receiving a predetermined instruction sent from a user; detecting that the user is in a predetermined posture; and detecting that the unmanned aerial vehicle or the user is in a predetermined enviromental condition.

Alternatively, the predetermined posture includes at least one of: a static posture or a movement posture; and a horizontal posture, an uphill posture or a downhill posture.

Alternatively, the predetermined enviromental condition where the unmanned aerial vehicle is includes at least one of: an ambient openness, an indoor or outdoor environment, and a distribution of obstacles; and the predetermined enviromental condition where the user is includes at least one of: an ambient openness, an indoor or outdoor environment, and the number of other users surrounding the user.

Alternatively, the predetermined photographic mode includes at least one of: a close-up mode, a distant view mode, a predetermined distance from the user, a predetermined angle with the user, and an encircled photographic mode with the user as a center.

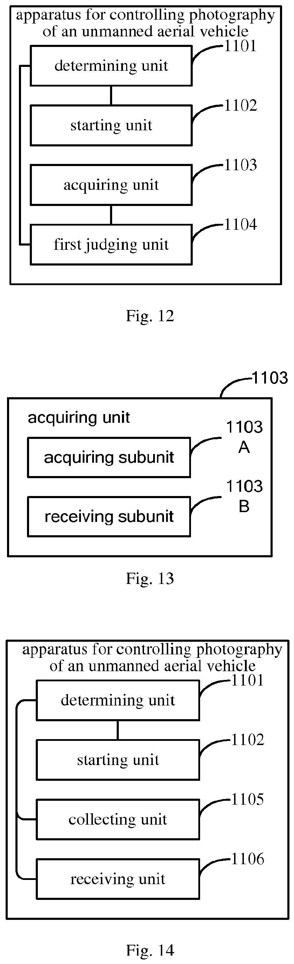

As shown in Fig. 12, Fig. 12 is a block diagram of another apparatus for controlling photography of an unmanned aerial vehicle according to an exemplary embodiment. Based on the embodiment shown in Fig. 11, the apparatus further includes an acquiring unit 1103 and a first judging unit 1104.

The acquiring unit 1103 is configured to acquire a motion characteristic of the user.

The first judging unit 1104 is configured to determine that the predetermined instruction sent from the user is received and that the predefined mode starting condition is satisfied, if the motion characteristic is in accordance with a predetermined characteristic.

Alternatively, the motion characteristic includes a trajectory graph formed by a gesture of the user.

As shown in Fig. 13, Fig. 13 is a block diagram of yet another apparatus for controlling photography of an unmanned aerial vehicle according to an exemplary embodiment. Based on the embodiment shown in Fig. 12, the acquiring unit 1103 includes an acquiring subunit 1103A or a receiving subunit 1103B.

The acquiring subunit 1103A is configured to perform an image acquisition on the user so as to acquire the motion characteristic.

The receiving subunit 1103B is configured to establish a communication with a smart device carried or used by the user and receive the motion characteristic acquired by the smart device.

As shown in Fig. 14, Fig. 14 is a block diagram of a still apparatus for controlling photography of an unmanned aerial vehicle according to an exemplary embodiment. Based on the embodiment shown in Fig. 11, the apparatus further includes a collecting unit 1105 or a receiving unit 1106.

The collecting unit 1105 is configured to perform an image acquisition on the user so as to determine a posture of the user.

The receiving unit 1106 is configured to establish a communication with a smart device carried or used by the user, to receive a predetermined physiological characteristic parameter of the user acquired by the smart device, and to determine a posture of the user according to the predetermined physiological characteristic parameter.

The determining unit 1101 determines that the predefined mode starting condition is satisfied if the posture of the user is in accordance with the predetermined posture.

It should be noted that, the collecting unit 1105 or the receiving unit 1106 included in the apparatus shown in Fig. 14 may also be included in the apparatus embodiments shown in Figs. 12-13, which is not limited herein.

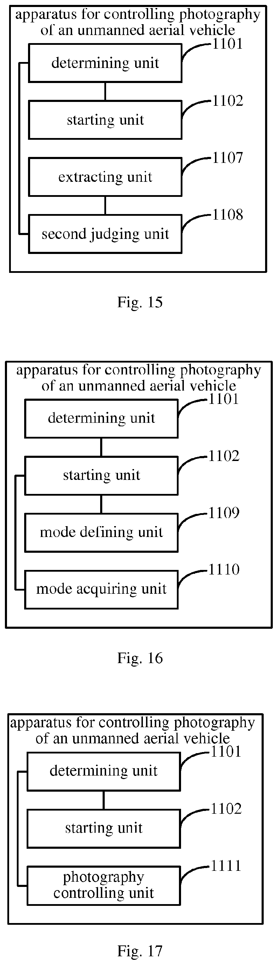

As shown in Fig. 15, Fig. 15 is a block diagram of still another apparatus for controlling photography of an unmanned aerial vehicle according to an exemplary embodiment. Based on the embodiment shown in Fig. 11, the apparatus further includes an extracting unit 1107 and a second judging unit 1108.

The extracting unit 1107 is configured to perform an image acquisition on an environment where the unmanned aerial vehicle or the user is, and extract enviromental characteristic included in an acquired image.

The second judging unit 1108 is configured to determine that the unmanned aerial vehicle or the user is in the predetermined enviromental condition and that the predefined mode starting condition is satisfied, if the enviromental characteristic is in accordance with a predetermined characteristic.

It should be noted that, the extracting unit 1107 and the second judging unit 1108 included in the apparatus shown in Fig. 15 may also be included in the apparatus embodiments shown in Figs. 12-14, which is not limited herein.

As shown in Fig. 16, Fig. 16 is a block diagram of still another apparatus for controlling photography of an unmanned aerial vehicle according to an exemplary embodiment. Based on the embodiment shown in Fig. 11, the apparatus further includes a mode defining unit 1109 or a mode acquiring unit 1110.

The mode defining unit 1109 is configured to define and store the predetermined photographic mode according to a received configuration instruction of a user.

The mode acquiring unit 1110 is configured to acquire and store the predetermined photographic mode defined by other users.

It should be noted that, the mode defining unit 1109 or the mode acquiring unit 1110 included in the apparatus shown in Fig. 15 may also be included in the apparatus embodiments shown in Figs. 12-15, which is not limited herein.

As shown in Fig. 17, Fig. 17 is a block diagram of still another apparatus for controlling photography of an unmanned aerial vehicle according to an exemplary embodiment. Based on the embodiment shown in Fig. 11, the apparatus further includes a photography controlling unit 1111.

The photography controlling unit 1111 is configured to stop photographing or perform a tracking photographing, if the predefined mode starting condition is not satisfied.

With respect to the devices in the above embodiments, the specific manners for performing operations for individual modules therein have been described in detail in the embodiments regarding the methods, which are not elaborated herein again.

Embodiments of the devices correspond to embodiments of the methods. For a related content, reference is made to partial descriptions of the embodiments of the methods. The above embodiments of the devices are exemplary. Units described as separate components may be or may not be physically separated. Components shown as units may be or may not be physical units, in other words, may be integrated on one position or distributed to a plurality of network units. Some or all of the modules may be selected to achieve the objective of the solution of the embodiments according to actual requirements. Those skilled in the art may understand and implement the present disclosure without making creative efforts.

Accordingly, the present disclosure further provides a device for controlling photography of an unmanned aerial vehicle, including: a processor; and a memory, configured to store instructions executable by the processor; in which, the processor is configured to: determine that a predefined mode starting condition is satisfied; and start a predetermined photographic mode corresponding to the predefined mode starting condition, so as to be applied in a photographic operation.

Accordingly, the present disclosure further provides a terminal, including a memory, and one or more programs stored in the memory, and having instructions configured to be executed by one or more processors to perform following operations: determining that a predefined mode starting condition is satisfied; and starting a predetermined photographic mode corresponding to the predefined mode starting condition, so as to be applied in a photographic operation.

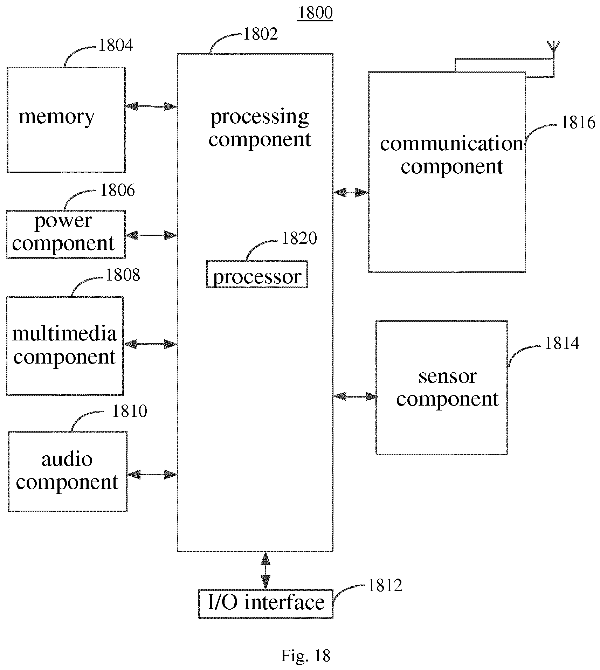

Fig. 18 is a schematic diagram of a device 1800 for controlling photography of an unmanned aerial vehicle according to an exemplary embodiment. For example, the device 1800 may be a mobile phone, a computer, a digital broadcasting terminal, a messaging device, a game console, a tablet device, a medical device, exercise equipment, a personal digital assistant, etc.

Referring to Fig. 18, the device 1800 may include the following one or more components: a processing component 1802, a memory 1804, a power component 1806, a multimedia component 1808, an audio component 1810, an Input/output (I/O) interface 1812, a sensor component 1814, and a communication component 1816.

The processing component 1802 typically controls overall operations of the terminal 1800, such as the operations associated with display, telephone calls, data communications, camera operations, and recording operations. The processing component 1802 may include one or more processors 1820 to execute instructions to perform all or part of the steps in the above described methods. Moreover, the processing component 1802 may include one or more modules which facilitate the interaction between the processing component 1802 and other components. For instance, the processing component 1802 may include a multimedia module to facilitate the interaction between the multimedia component 1808 and the processing component 1802.

The memory 1804 is configured to store various types of data to support the operation of the terminal 1800. Examples of such data include instructions for any applications or methods operated on the terminal 1800, contact data, phonebook data, messages, pictures, video, etc. The memory 1804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1806 provides power to various components of the terminal 1800. The power component 1806 may include a power management system, one or more power sources, and any other components associated with the generation, management, and distribution of power in the terminal 1800.

The multimedia component 1808 includes a screen providing an output interface between the terminal 1800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and other gestures on the touch panel. The touch sensors may not only sense a boundary of a touch or swipe action, but also sense a duration time and a pressure associated with the touch or swipe action. In some embodiments, the multimedia component 1808 includes a front camera and/or a rear camera. The front camera and the rear camera may receive external multimedia data while the terminal 1800 is in an operation mode, such as a photographing mode or a video mode. Each of the front camera and the rear camera may be a fixed optical lens system or have focus and optical zoom capability.

The audio component 1810 is configured to output and/or input audio signals. For example, the audio component 1810 includes a microphone (MIC) configured to receive an external audio signal when the intelligent terminal 1800 is in an operation mode, such as a call mode, a recording mode, and a voice recognition mode. The received audio signal may be further stored in the memory 1804 or transmitted via the communication component 1816. In some embodiments, the audio component 1810 further includes a speaker to output audio signals.

The I/O interface 1812 provides an interface for the processing component 1802 and peripheral interface modules, such as a keyboard, a click wheel, buttons, and the like. The buttons may include, but are not limited to, a home button, a volume button, a starting button, and a locking button.

The sensor component 1814 includes one or more sensors to provide status assessments of various aspects of the terminal 1800. For instance, the sensor component 1814 may detect an open/closed status of the terminal 1800 and relative positioning of components (e.g. the display and the keypad of the terminal 1800). The sensor component 1814 may also detect a change in position of the terminal 1800 or of a component in the terminal 1800, a presence or absence of user contact with the terminal 1800, an orientation or an acceleration/deceleration of the terminal 1800, and a change in temperature of the terminal 1800. The sensor component 1814 may include a proximity sensor configured to detect the presence of nearby objects without any physical contact. The sensor component 1814 may also include a light sensor, such as a CMOS or CCD image sensor, for use in imaging applications. In some embodiments, the sensor component 1814 may also include an accelerometer sensor, a gyroscope sensor, a magnetic sensor, a pressure sensor, or a temperature sensor.

The communication component 1816 is configured to facilitate wired or wireless communication between the terminal 1800 and other devices. The terminal 1800 can access a wireless network based on a communication standard, such as WIFI, 2G, or 3G, or a combination thereof. In one exemplary embodiment, the communication component 1816 receives a broadcast signal or broadcast associated information from an external broadcast management system via a broadcast channel. In one exemplary embodiment, the communication component 1816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as the memory 1804 including instructions. The above instructions are executable by the processor 1820 in the device 1800, for performing the above-described methods. For example, the non-transitory computer-readable storage medium may be a ROM, a RAM, a CD-ROM, a magnetic tape, a floppy disc, an optical data storage device, and the like.

Other embodiments of the present disclosure will be apparent to those skilled in the art from consideration of the specification and practice of the present disclosure disclosed here. This application is intended to cover any variations, uses, or adaptations of the present disclosure following the general principles thereof and including such departures from the present disclosure as come within known or customary practice in the art.

## Claims

1. A method for controlling photography of an unmanned aerial vehicle, comprising:
determining (102) that a predefined mode starting condition is satisfied; and
starting (104) a predetermined photographic mode corresponding to the predefined mode starting condition, so as to be applied in a photographic operation.

2. The method according to claim 1, wherein, the predefined mode starting condition comprises at least one of:
receiving a predetermined instruction sent from a user;
detecting that the user is in a predetermined posture; and
detecting that the unmanned aerial vehicle or the user is in a predetermined ambient condition.

3. The method according to claim 2, further comprising:
acquiring (202) a motion characteristic of the user; and
determining (204, 206) that the predetermined instruction sent from the user is received and that the predefined mode starting condition is satisfied, if the motion characteristic is in accordance with a predetermined characteristic,
wherein
acquiring a motion characteristic of the user comprises:
performing an image acquisition on the user so as to acquire the motion characteristic; or
establishing a communication with a smart device carried or used by the user and
receiving the motion characteristic acquired by the smart device, and
the motion characteristic comprises a trajectory graph formed by a gesture of the user.

4. The method according to claim 2 or 3, further comprising:
performing (502) an image acquisition on the user so as to determine a posture of the user; or
establishing (502) a communication with a smart device carried or used by the user, receiving (502) a predetermined physiological characteristic parameter of the user acquired by the smart device, and determining (502) a posture of the user according to the predetermined physiological characteristic parameter;
wherein it is determined that the predefined mode starting condition is satisfied if the posture of the user is in accordance with the predetermined posture; and
the predetermined posture comprises at least one of:
a static posture or a movement posture; and
a horizontal posture, an uphill posture or a downhill posture.

5. The method according to any one of claims 2 to 4, further comprising:
performing (902) an image acquisition on an environment where the unmanned aerial vehicle or the user is, and extracting (902) an ambient characteristic included in an acquired image; and
determining (904, 906) that the unmanned aerial vehicle or the user is in the predetermined ambient condition and that the predefined mode starting condition is satisfied, if the ambient characteristic is in accordance with a predetermined characteristic, wherein
the predetermined ambient condition where the unmanned aerial vehicle is comprises at least one of: an ambient openness; an indoor or outdoor environment; and a distribution of obstacles;
the predetermined ambient condition where the user is comprises at least one of: an ambient openness; an indoor or outdoor environment; and the number of other users surrounding the user.

6. The method according to any one of claims 1 to 5, wherein the predetermined photographic mode comprises at least one of:
a close-up mode, a distant view mode, a predetermined distance from the user, a predetermined angle with the user, and an encircled photographic mode with the user as a center.

7. The method according to any one of claims 1 to 6, further comprising:
defining and storing the predetermined photographic mode according to a received configuration instruction of a user; or
acquiring and storing the predetermined photographic mode defined by other users.

8. The method according to any one of claims 1 to 7, further comprising:
stopping (210;510;910) photographing or performing (210;510;910) a tracking photographing, if the predefined mode starting condition is not satisfied.

9. An apparatus for controlling photography of an unmanned aerial vehicle, comprising:
a determining unit (1101), configured to determine that a predefined mode starting condition is satisfied; and
a starting unit (1102), configured to start a predetermined photographic mode corresponding to the predefined mode starting condition, so as to be applied in a photographic operation.

10. The apparatus according to claim 9, wherein, the predefined mode starting condition comprises at least one of:
receiving a predetermined instruction sent from a user;
detecting that the user is in a predetermined posture; and
detecting that the unmanned aerial vehicle or the user is in a predetermined ambient condition.

11. The apparatus according to claim 10, further comprising:
an acquiring unit (1103), configured to acquire a motion characteristic of the user; and
a first judging unit (1104), configured to determine that the predetermined instruction sent from the user is received and that the predefined mode starting condition is satisfied, if the motion characteristic is in accordance with a predetermined characteristic, wherein the acquiring unit (1103) comprises:
an acquiring subunit (1103 A), configured to perform an image acquisition on the user so as to acquire the motion characteristic; or
a receiving subunit (1103B), configured to establish a communication with a smart device carried or used by the user and receive the motion characteristic acquired by the smart device, and
the motion characteristic comprises a trajectory graph formed by a gesture of the user.

12. The apparatus according to claim 10 or 11, further comprising:
a collecting unit (1105), configured to perform an image acquisition on the user so as to determine a posture of the user; or
a receiving unit (1106), configured to establish a communication with a smart device carried or used by the user, receive a predetermined physiological characteristic parameter of the user acquired by the smart device, and determine a posture of the user according to the predetermined physiological characteristic parameter;
wherein the determining unit (1102) determines that the predefined mode starting condition is satisfied if the posture of the user is in accordance with the predetermined posture, and
the predetermined posture comprises at least one of:
a static posture or a movement posture; and
a horizontal posture, an uphill posture or a downhill posture.

13. The apparatus according to any one of claims 10 to 12, further comprising:
an extracting unit (1107), configured to perform an image acquisition on an environment where the unmanned aerial vehicle or the user is, and extract an ambient characteristic included in an acquired image;
a second judging unit (1108), configured to determine that the unmanned aerial vehicle or the user is in the predetermined ambient condition and that the predefined mode starting condition is satisfied, if the ambient characteristic is in accordance with a predetermined characteristic; wherein
the predetermined ambient condition where the unmanned aerial vehicle is comprises at least one of: an ambient openness; an indoor or outdoor environment; and a distribution of obstacles;
the predetermined ambient condition where the user is comprises at least one of: an ambient openness; an indoor or outdoor environment; and the number of other users surrounding the user.

14. The apparatus according to any one of claims 9 to 13, wherein the predetermined photographic mode comprises at least one of:
a close-up mode, a distant view mode, a predetermined distance from the user, a predetermined angle with the user, and an encircled photographic mode with the user as a center,
the apparatus comprises:
a mode defining unit (1109), configured to define and store the predetermined photographic mode according to a received configuration instruction of a user; or
a mode acquiring unit (1110), configured to acquire and store the predetermined photographic mode defined by other users; or
a photography controlling unit (1111), configured to stop photographing or perform a tracking photographing, if the predefined mode starting condition is not satisfied.

15. An electronic device comprising:
a processor; and
a memory, configured to store instructions executable by the processor;
wherein, the processor is configured to perform the method according to any one of claims 1 to 8.
